# EUROPEAN PATENT SPECIFICATION

(11) **EP 0 326 166 B1**
(45) Date of publication and mention of the grant of the patent: **01.12.1993**
(21) Application number: 89101465.6
(22) Date of filing: 27.01.1989
(51) Int. Cl.: C08F 8/50, C08F 10/00

(54) **Thermodegradable compositions based on crystalline homo- or copolymers of propylene and process for degrading such polymers**
Thermische Abbauzusammensetzungen aus kristallinen Homo- und Copolymeren von Propylen und Verfahren zum Abbau dieser Polymere
Compositions thermo-dégradables à base de polymères et copolymères cristallins de propylène et procédé de dégradation de ces polymères

(30) Priority: 28.01.1988 IT 1923388
(43) Date of publication of application: 02.08.1989
(73) Proprietor: ENICHEM S.p.A., 20124 Milano (IT)
(72) Inventor: Addeo, Antonio, Nola (Napoli) S. Paolo Belsito (IT); Vezzoli, Annibale, I-22060 Carugo (Como) (IT); Saccardi, Stefano, I-20154 Milano (IT); Brichta, Corrado, I-20100 Milano (IT)
(74) Representative: Barz, Peter, Dr.

(56) References cited:
- EP-A- 0 131 323
- US-A- 3 144 436
- US-A- 4 675 426
- PATENT ABSTRACTS OF JAPAN, vol. 10, no. 383 (C-393)[2440], 23rd December 1986

## Description

The present invention relates to new thermodegradable compositions based on homo- or copolymers of propylene. Moreover, it relates to a process for carrying out the selective degradation of crystalline homo- or copolymers of propylene, in order to obtain polymers showing a narrower molecular weight distribution and being suitable for injection moulding and production of fibres and films.

From US-A-3 144 436 a process concerning the degradation of molten crystalline polypropylene is known, which degradation is carried out, substantially in the absence of oxygen, in a screw extruder at a temperature of 100°C above the melting point of the polymer and in the presence of a free radical initiator, and under such conditions that the amount of oxygen introduced into the polymer is kept below 0.2 p.h.r. Such a degradation process leads to an increase in "melt flow index" and, therefore, results in a reduced polymer viscosity.

The use of organic peroxides as initiators as described in the above patent, however, causes a concomitant thermooxidative degradation which makes control of the process impossible and, therefore, reproducible results cannot be obtained thereby.

Moreover, the decomposition residues of the peroxides are generally volatile and cause an unpleasant smell.

Carrying out the degradation of crystalline homopolymers and copolymers of propylene by using derivatives of 1,2-diphenylethane as free radical initiators is also known. According to JP-A-J5 4090-291 brominated and alkyl derivatives of such compounds have been used for this purpose. In this case too, however, the termooxidative degradation of the polymer at the required high temperatures cannot be avoided and, furthermore, residues of the initiator are always present in the degraded polymer, which residues consist of undesirable volatile or brominated compounds. Particularly, the presence of brominated residues prevents the production of articles suitable for contact with foodstuffs.

The same drawbacks are encountered when the process of US-A-4 555 695 is employed, wherein chlorinated derivatives of 1,2-diphenylethane are used.

US-A-4 675 426, although disclosing some of the benzopinacol derivatives of general formula (I), is not directed to the selective degradation of polymers in order to selectively reduce the molecular weight thereof, but to just the opposite, i.e., the polymerization (crosslinking) of organic monomers and polymers by means of said benzopinacol derivatives (compare, e.g., claim 1).

JP-A-61-174 203, while directed to a process for decreasing the molecular weight of polypropylene, does not disclose or suggest the use of the present benzopinacol derivatives for said purpose. Instead, this document discloses the use of certain trimethylsilyl peroxides to this end. There are significant structural and chemical differences between peroxide compounds and the benzopinacol derivatives used in the present invention
EP-A-0 131 323 is directed to a process for the degradation of (co)-polymers of propylene using as degradants chlorinated 1,1,2,2-tetramethyl-1,2-diphenyl ethane (chlorinated bicumyl) and/or derivatives thereof carring alkyl substituents in the aromatic nuclei (see, e.g., ab-stract of D3). In this case, too, there is a considerable structural difference between the chlorinated bicumyls and the present benzopinacol derivatives.

It has now, surprisingly, been found that the selective degradation of homo- and copolymers of propylene can be carried out, even in the presence of oxygen, without thermooxidative degradation of the polymer by heating the polymer to temperatures of from 250°C to 350°C in the presence of one or more primary and/or secondary antioxidants and at least one benzopinacol derivative of formula (I) 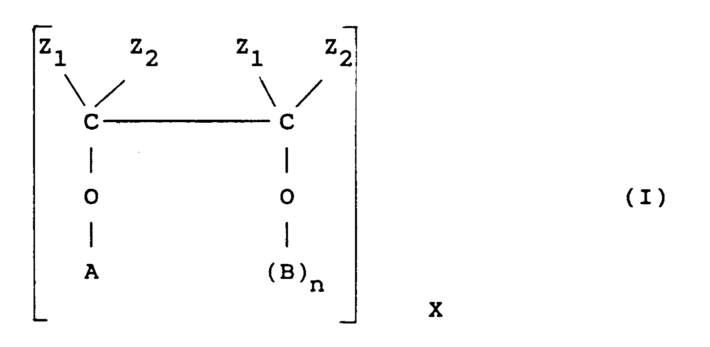
wherein n is 1 or 0, and wherein:
for n = 1 and X = 1
Z₁ and Z₂ together form a 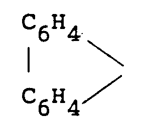
group (fluorenone),
A and B are 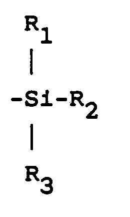
groups,
wherein R₁, R₂ and R₃, the same or different from each other, are (optionally substituted) C₁-C₄ alkyl radicals (e.g. methyl, ethyl, n- or i-propyl, n-, i-, sec- or tert-butyl, particularly, methyl and ethyl) or (optionally substituted) C₆-C₁₂ aryl radicals (e.g., phenyl, naphthyl and biphenylyl);
for X ranging from 3 to 20 and n = 0
Z₁ and Z₂, the same or different from each other, are (preferably C₆-C₁₂) aryl radicals (e.g., optionally substituted phenyl, naphthyl or biphenylyl);
A is a 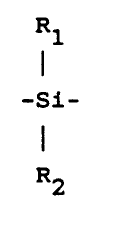
group
and is part of an oligomer of formula (I), containing at least 3 and up to 20 repeating units of formula (n = 0): 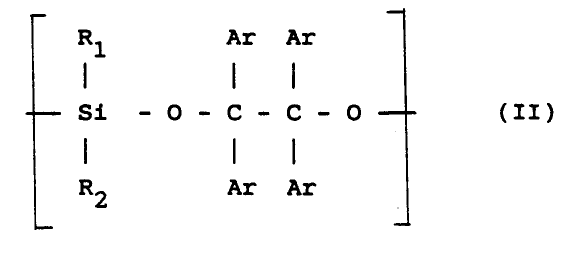
wherein Ar is an aryl radical and R₁ and R₂ have the meanings as defined above;
and for n = 0, X = 1
Z₁ and Z₂, the same or different from each other, are (preferably C₆-C₁₂) aryl radicals (e.g., optionally substituted phenyl, naphthyl or biphenylyl);
A represents 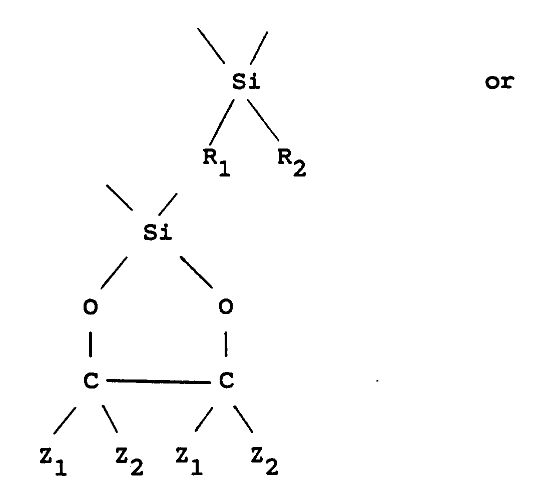
the silicon atom being also linked to the oxygen atoms of the two groups 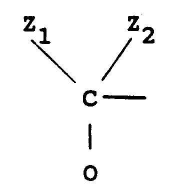
and R₁ and R₂ have the meanings defined above.

The compounds of formula (I) are known. They may be prepared according to the methods described, for instance, in Polymer Bulletin, 16, pages 95 to 102 (1986), Springer Ed. and in J. P. Sci: Part A: Polymer Chemistry, Vol. 24, pages 1197 to 1215 (1986).

Examples of products within the scope of general formula (I) are for n = 1: 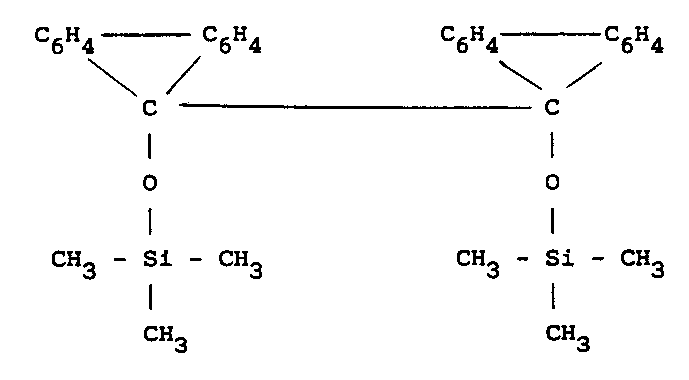
For n = 0: 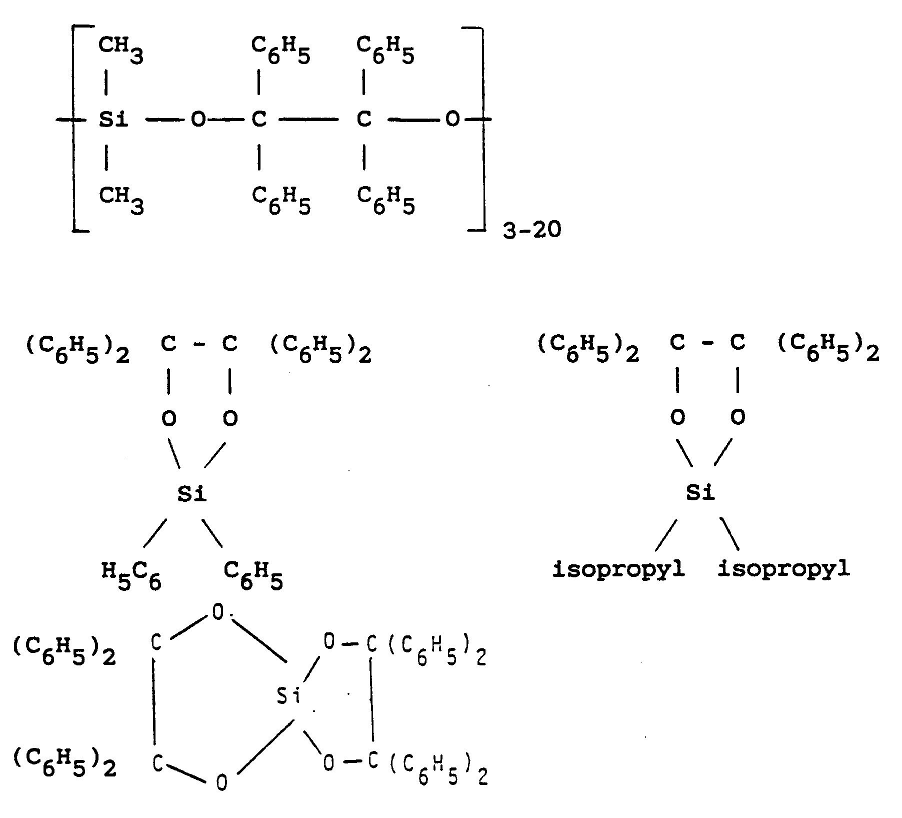
An object of the present invention are, thus, thermodegradable compositions of homo- and copolymers of propylene, comprising at least one benzopinacol derivative falling within formula (I) as illustrated above and at least one primary and/or secondary antioxidant.

A further object of the present invention is a process for carrying out the degradation of homo- or copolymers of propylene, which comprises the heating of such homo- or copolymers to a temperature of from 250 to 350°C in the presence of at least one benzopinacol derivative of formula (I) as illustrated above as well as of one or more primary and/or secondary antioxidants.

The homo- or copolymers of propylene, to which the compositions and the process of the present invention refer may be stereoregular polymers obtained by means of Ziegler-Natta type catalysts including, beside polypropylene consisting essentially of isotactic macromolecules, the copolymers of propylene and ethylene containing predominantly propylene. Said homo- or copolymers may also be of the statistic or block type and include copolymers of propylene and alpha-olefins of formula CH₂ = CH-R, wherein R is an alkyl radical having from 2 to 6 carbon atoms, particularly, 1-butene and 1-hexene. Preferably, they are crystalline.

The homopolymer or copolymer of propylene that is present in the degradable compositions of the present invention may have MFI values falling within a wide range, generally between 0.2 and 100 but preferably between 0.2 to 0.5 and 50.

As antioxidants all the common primary and secondary antioxidants may be employed which are suitable for avoiding the degradation of the polymeric macromolecules due to secondary autoxidation reactions. Specifially, the sterically hindered phenols may be mentioned, particularly, (2,6)-di-tert-butyl-4-methylphenol (BHT), as well as secondary aromatic amines, thioethers, phosphites, phosphonites, zinc dithiobutylcarbamate and mixtures thereof.

Moreover, synergistic combinations of BHT with 2-2′-thio-diethyl-bis-[3-(3,5-di-tert-butyl-4-hydroxyphenyl)]-propionate and/or with phosphites and phosphonites, in particular, tetrakis-(2,4-di-tert-butylphenyl)-4,4′-diphenylenediphosphonite may be used to advantage.

The amounts of the benzopinacol derivatives of formula (I), to be used in the compositions and process of the present invention, may vary within wide ranges depending on the desired extent of the reduction of the molecular weight. Said amounts generally range from 0.01 to 3% by weight, based on the polymer. Amounts ranging from 0.1 to 1% by weight are preferred.

The antioxidants to be used according to the invention are, preferably, present in total amounts of not more than 2% by weight, particularly of from 0.01 to 1% by weight, based on the polymer.

In addition to these compounds light stabilizers comprising, for instance, 2(2′-hydroxyphenyl)benzotriazoles, 2-hydroxy-4-alkoxybenzophenones, sterically hindered amines and the like may be added. Other additives suitable for improving the rheologic properties of the products, for instance nucleating agents, may also be advantageously employed in the degradation process.

The preferred temperatures for the degradation according to the process of the present invention range from 270 to 330°C.

The degradation reaction may be carried out by heating the polymers at the temperatures mentioned above for a period of time generally ranging from 0.1 to 20 minutes, preferably from 0.5 to 10 minutes, in a standard, closed mixer (for instance, of the Banbury type) or, preferably, in a screw extruder. Thereafter, the polymer thus degraded may be granulated.

After having been dissolved, suitably in an organic solvent, the benzopinacol derivative may be added directly to the powdered (co)polymer or it may be introduced in the form of a concentrated masterbatch of polymer, directly into the extruder together with the (co)polymer to be degraded.

According to another embodiment of the present invention the benzopinacol derivatives as well as the antioxidants are added at an earlier stage, i.e., during the synthesis of the (co)polymer by a polymerization of the monomers in liquid phase. Thereafter, the (co)polymers thus obtained may be subjected to a degradation reaction as described above.

The polymer degradation is characterized by an increase in melt flow index, determined according to ASTM D-1238-73, condition L, and a corresponding reduction of the intrinsic viscosity of the polymer.

The following examples illustrate the present invention without limiting the scope thereof.

### EXAMPLE 1 (Reference)

500 parts by weight of powdered crystalline polypropylene, having an apparent density of 0.50 g/cm³, a melt flow index of 12 (according to ASTM-1233-73, condition L) and produced by Himont Italy (tradename Moplen® FL-F20) were uniformly mixed in a Banbury mixer at room temperature with 5 parts by weight of BHT antioxidants (tradename Tepal®, produced by ICI), 5 parts by weight of phenolic antioxidant containing sulphur (tradename Irganox® 1035, produced by Ciba-Geigy) and 5 parts by weight of calcium stearate. Thereafter, the composition thus obtained was subjected to heating at 290°C and continuously stirred.

A sample was drawn every 2 minutes for a total of 10 minutes and, after cooling to room temperature, the MFI and intrinsic viscosity [η] at 130 °C in tetralin were determined.

From the data set out in table 1, no substantial change indicating any degradation of the polymer can be recognized.

### EXAMPLE 2

43 parts by weight of a silylpinacolone ether, an oligomer of the monomer of formula: 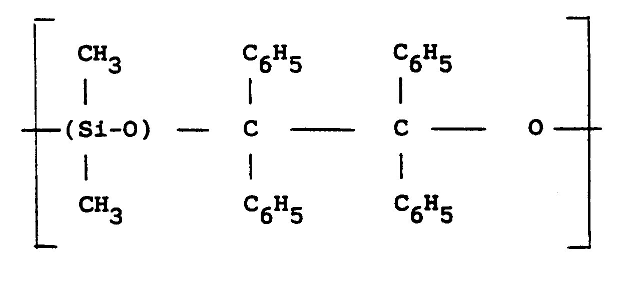
(Initiator ZF - WFH - 5090, produced by Bayer) were added to the composition described in (reference) example 1.

The mixture thus obtained was subjected to heating at 280°C. Then the procedure of example 1 was followed.

Table 1 shows that the MFI values of the polymer thus treated according to the invention increase so significantly that values over 100 are achieved whereas the corresponding values of the intrinsic viscosity are remarkably low.

**TABLE 1**

| Mixing time (minutes) | MFI (230°C-2,169 kg) | | [η] 130°C tetralin (ml/g) | |
|---|---|---|---|---|
| | Example 1 (Reference) | Example 2 | Example 1 (Reference) | Example 2 |
| 0 | 12 | 12 | 134.5 | 134.5 |
| 2 | 14 | 15 | 128.7 | 126.2 |
| 4 | 14.5 | 35.3 | 126.2 | 97.8 |
| 6 | 15.2 | 67.5 | 125.7 | 82.1 |
| 8 | 15.8 | 95 | 124.3 | 74.5 |
| 10 | 17.5 | 102.7 | 120.7 | 72.8 |

### EXAMPLE 3

100 parts by weight of crystalline polypropylene (Moplen® FL-F20) were mixed for half a minute in a Henschel turbomixer with 0.1 parts by weight of BHT, 0.1 parts by weight of antioxidant Irganox® 1035 and 0.1 parts by weight of calcium stearate. Finally, 0.6 p.h.r. of bis-(trimethylsilyl)fluorenone-pinacolate having the following formula were added: 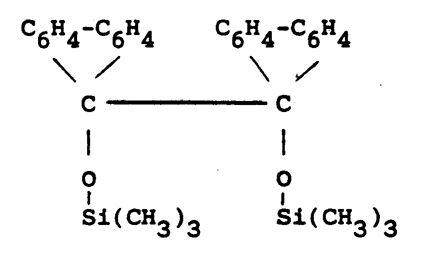
which had been obtained according to procedure B described by J.V. Crivello et al. in the Journal of Polymer Science: Part A, Polymer Chemistry, Vol. 24 (1986), page 1200.

Then the mixture was fed into the feedtank of a Werner-Pfleiderer double-screw extruder type 2D5 K28, having screws with a diameter of 28 mm. The conditions were as follows: Flow of the mixture: 3 kg/h; residence time: 100 seconds; screw speed: 100 rpm. As shown by the data in table 2, the MFI increases remarkably as a function of the temperature of the molten mass.

In the enclosed diagram the MFI values within the temperature range of from 240°C to 310°C, under the conditions described above, are shown.

**TABLE 2**

| Temperature of the molten mass (°C) | MFI of the extruded material (g/10 minutes) |
|---|---|
| 240 | 6 |
| 280 | 11 |
| 300 | 40 |
| 310 | > 100 |

### EXAMPLE 4

A mixture of 100 parts by weight of an ethylene/propylene block copolymer (MFI 2.4 g/10 minutes; content by weight of ethylene = 14.1%), 3 parts by weight of talc (fine powder of a particle diameter of about 1 µm) and 0.1 parts by weight of antioxidant BHT, 0.1 parts by weight of Irganox® 1035 and 0.6 parts by weight of cyclic silylpinacolon ether having the following formula: 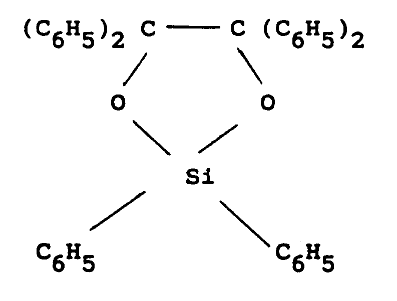
and having been obtained according to the method described by J.V. Crivello et al. in Polymer Bulletin 16, pages 95 to 102 (1986), was fed into a Werner-Pfleiderer double screw extruder of the same type as indicated in example 3, at a temperature of from 240 to 310°C.

The specimens obtained from the blend thus treated were subjected to a determination of flexural modulus and impact strength.

A flexural modulus of 14000 kg/cm² and an impact strength of 105 kg-cm at 40°C were determined, whereas the specimens obtained without the use of cyclic silylpinacolon ether had an impact strength of 4.5 kg-cm only although they showed an elasticity modulus of 14500 kg/cm².

### EXAMPLE 5

500 g of propylene and 2.1 millimoles of Al(C₂H₅)₃ together with 0.7 millimoles of ethyl benzoate and 20 mg of solid catalyst, suspended in 30 ml of n-heptane and prepared according to JP-A-77-151091, were introduced into a 3 l stainless steel autoclave under a hydrogen pressure of 0.3 atmospheres.

Finally, 1.8 g of spirocyclic silyl-ortho ester (m.p. 240°C) of the following formula: 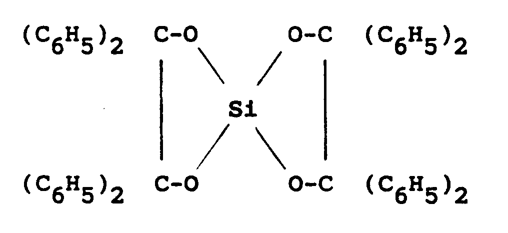
were added.

This compound had been prepared according to the method described by J.V. Crivello et al. in Polymer Bulletin 16, page 98 (1986).

After polymerization at 60°C for 4 hours the residual monomer was removed by evaporation, thereby recovering 300 g of polymer, 94% of which turned out to be insoluble in boiling n-heptane and which had an intrinsic viscosity [η] at 130°C in tetraline of 136 ml/g and an MFI of 5.6 (acccording to ASTM D 1231, condition L).

100 parts by weight of the crystalline polymer containing the above-mentioned spirocyclic ether were mixed in a Henschel turbomixer with 0.1 parts by weight of BHT, 0.1 parts by weight of antioxidant Irganox ® 1035 and 0.1 parts by weight of Ca-stearate.

The composition thus obtained was extruded under the same conditions as in example 3.

After extrusion, the MFI had increased to 53 whereas the intrinsic viscosity fell to 88.6 ml/g.

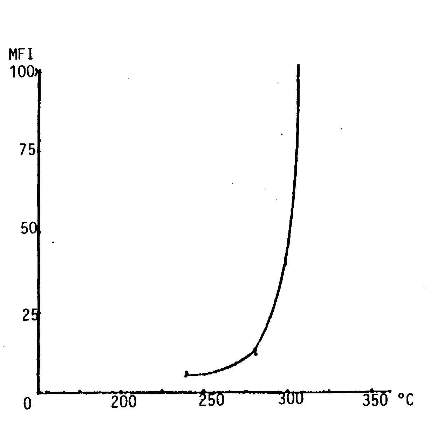

## Claims

1. Thermodegradable compositions, based on homo- or copolymers of propylene, comprising at least one primary and/or secondary antioxidant and at least one benzopinacol derivative having the general formula: 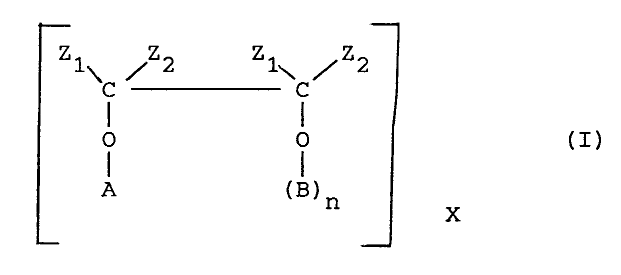 wherein n is 1 or 0,
and wherein: for n = 1 and X = 1:
Z₁ and Z₂ together form a 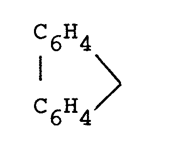 group
A and B are 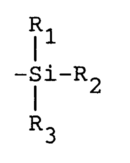 groups,
wherein R₁, R₂ and R₃, the same or different from each other, represent C₁-C₄ alkyl radicals or C₆-C₁₂ aryl radicals;
for X ranging from 3 to 20 and n = 0:
Z₁ and Z₂, the same or different from each other, are aryl radicals,
A is a 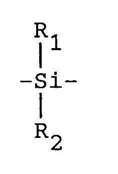 group
and is part of an oligomer of formula (I), which contains at least 3 and up to 20 repeating units of formula 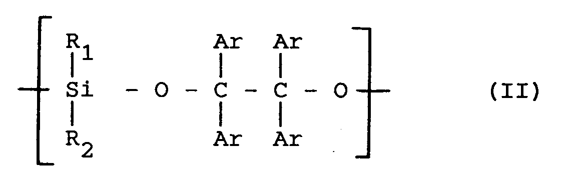 wherein Ar is an aryl radical and R₁ and R₂ have the meanings as defined above;
and for n = 0, X = 1:
Z₁ and Z₂, the same or different from each other, are aryl radicals;
A represents 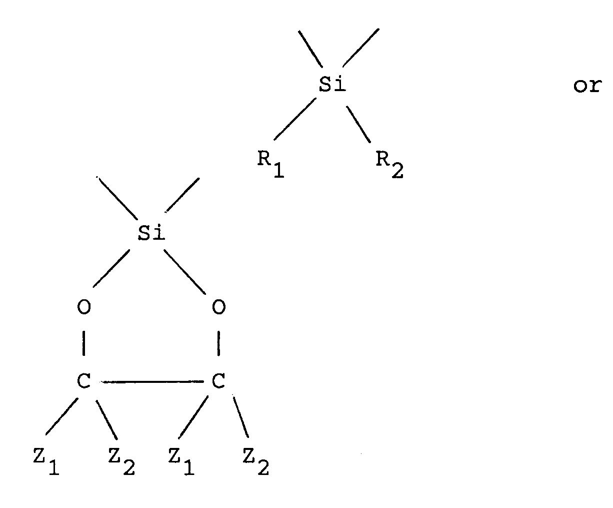 the silicon atom being also linked to the oxygen atoms of the two groups 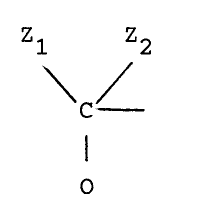 and R₁ and R₂ have the meanings defined above.

2. Compositions according to claim 1, wherein the benzopinacol derivative is present in amounts ranging from 0.01 to 3% by weight, based on the polymer.

3. Compositions according to any one of claims 1 and 2, wherein the antioxidant(s) is (are) present in amounts up to 2% by weight, based on the polymer.

4. Compositions according to any one of claims 1 to 3, wherein the benzopinacol derivative of general formula (I) wherein X ranges from 3 to 20 and n = 0 is an oligomer having 3 to 20 repeating units of formula:

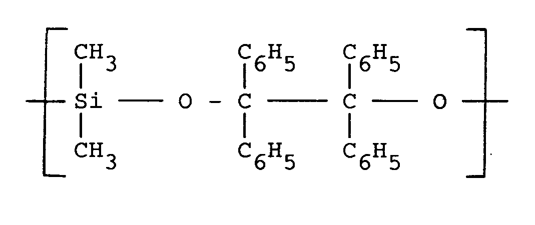

5. Compositions according to any one of claims 1 to 3, wherein the benzopinacol derivative has the formulae:

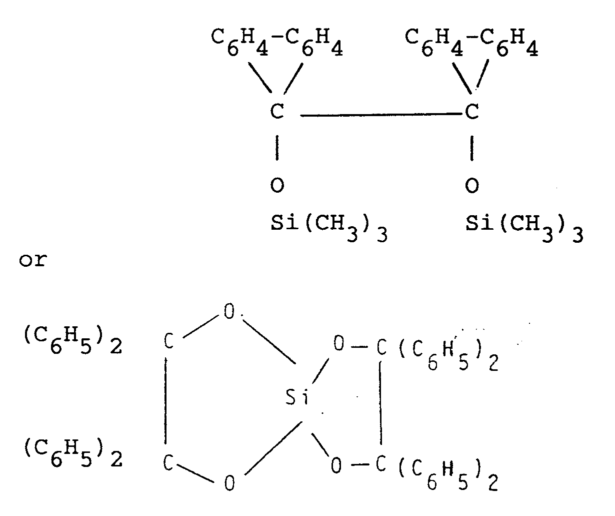

6. Compositions according to any one of claims 1 to 5, wherein the polymer is polypropylene, consisting essentially of isotactic macromolecules.

7. Compositions according to any one of claims 1 to 6, wherein the polymer is a crystalline copolymer of propylene and ethylene containing a predominant portion of propylene.

8. Compositions according to any one of claims 1 to 7, wherein said homo- or copolymers of propylene are crystalline polymers.

9. Process for thermodegrading homo- or copolymers of propylene comprising the heating of said homo- or copolymers to a temperature of from 250 to 350°C, preferably from 270 to 330°C, in the presence of one or more primary and/or secondary antioxidants and of at least one compound of general formula (I) as defined in any one of claims 1, 4 and 5.

10. Process according to claim 9, wherein the polymer is polypropylene, consisting essentially of isotactic macromolecules.

11. Process according to any one of claims 9 and 10, wherein the polymer is a copolymer of propylene and ethylene, containing a predominant portion of propylene.

12. Process according to any one of claims 9 to 11, wherein the benzopinacol derivative is employed in amounts of from 0.01 to 3% by weight, based on the polymer.

13. Process according to any one of claims 9 to 12, wherein said homo- or copolymers of propylene are crystalline polymers.

## Patentansprüche

1. Thermisch abbaubare Zusammensetzungen, basierend auf Homo- oder Copolymeren von Propylen, umfassend mindestens ein primäres und/oder sekundäres Antioxidationsmittel und mindestens ein Benzopinacol-Derivat mit der allgemeinen Formel 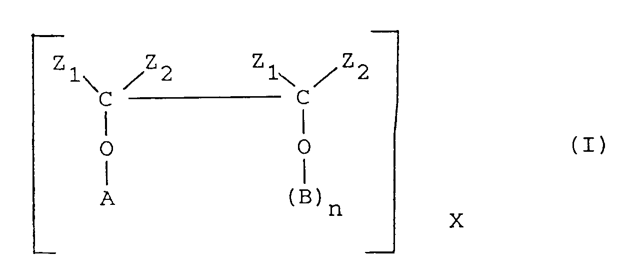 worin n 1 oder 0 ist,
und worin: für n = 1 und X = 1:
Z₁ und Z₂ zusammen eine Gruppe 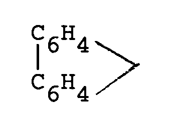 bilden,
A und B Gruppen 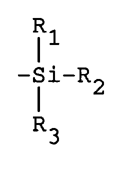 sind,
worin R₁, R₂ und R₃, gleich oder verschieden voneinander, C₁-C₄-Alkylreste oder C₆-C₁₂-Arylreste darstellen;
für X im Bereich von 3 bis 20 und n = 0:
Z₁ und Z₂, gleich oder verschieden voneinander, Arylreste sind,
A eine Gruppe 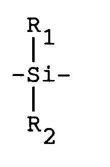 und Teil eines Oligomeren der Formel (I) ist, welches wenigstens 3 und bis zu 20 sich wiederholende Einheiten der Formel (II) 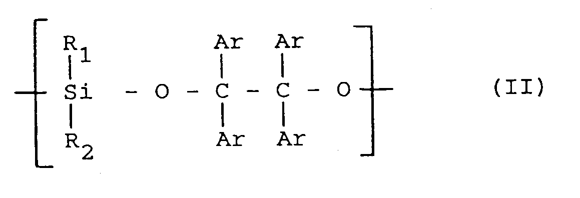 enthält, worin Ar ein Arylrest ist und R₁ und R₂ dieselben Bedeutungen wie oben definiert aufweisen;
und für n = 0, X = 1;
Z₁ und Z₂, gleich oder verschieden voneinander, Arylreste sind,
A für 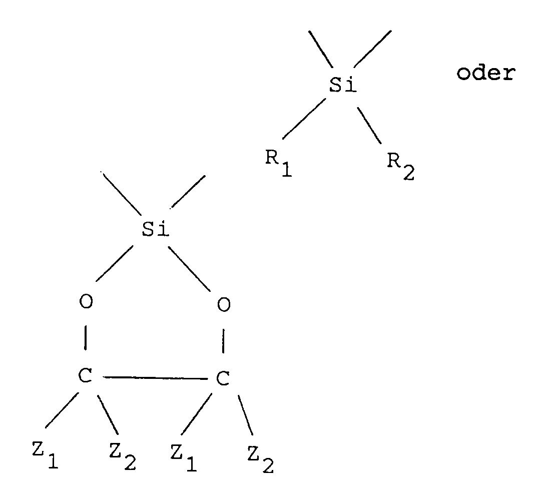 steht, wobei das Siliciumatom auch an die Sauerstoffatome der beiden Gruppen 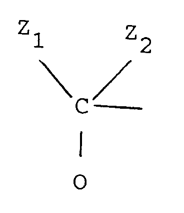 geknüpft ist, und R₁ und R₂ die oben definierten Bedeutungen aufweisen.

2. Zusammensetzungen nach Anspruch 1, in welchen das Benzopinacol-Derivat in Mengen im Bereich von 0,01 bis 3 Gew.-%, bezogen auf das Polymer, anwesend ist.

3. Zusammensetzungen nach irgendeinem der Ansprüche 1 und 2, in welchen das bzw. die Antioxidationsmittel in Mengen von bis zu 2 Gew.-%, bezogen auf das Polymer, anwesend ist bzw. sind.

4. Zusammensetzungen nach irgendeinem der Ansprüche 1 bis 3, in welchen das Benzopinacol-Derivat der allgemeinen Formel (I), worin X im Bereich von 3 bis 20 liegt und n = 0, ein Oligomer mit 3 bis 20 sich wiederholenden Einheiten der Formel: 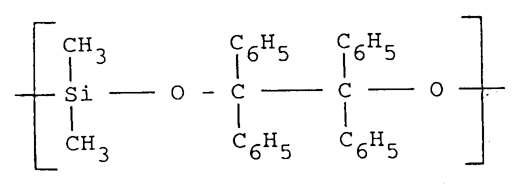 ist.

5. Zusammensetzungen nach irgendeinem der Ansprüche 1 bis 3, in welchen das Benzopinacol-Derivat die Formeln 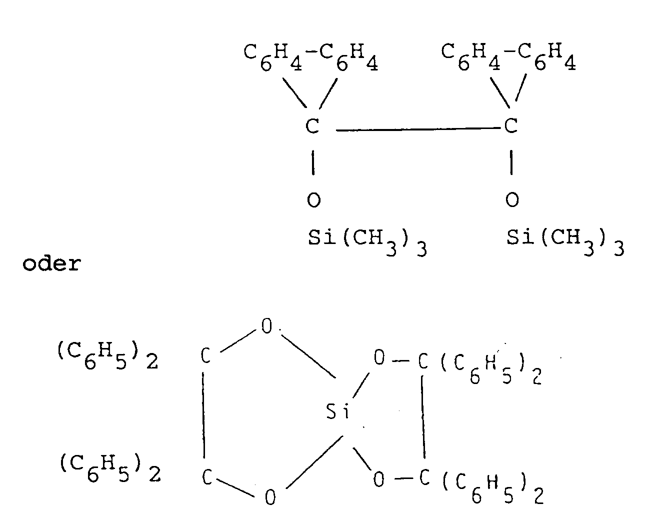 aufweist.

6. Zusammensetzungen nach irgendeinem der Ansprüche 1 bis 5, in welchen das Polymer Polypropylen, im wesentlichen aus isotaktischen Makromolekülen bestehend, ist.

7. Zusammensetzungen nach irgendeinem der Ansprüche 1 bis 6, in welchen das Polymer ein kristallines Copolymer von Propylen und Ethylen, das einen überwiegenden Anteil an Propylen enthält, ist.

8. Zusammensetzungen nach irgendeinem der Ansprüche 1 bis 7, in welchen die Homo- oder Copolymeren von Propylen kristalline Polymere sind.

9. Verfahren zum thermischen Abbau von Homo- oder Copolymeren von Propylen, umfassend das Erwärmen der Homo- oder Copolymeren auf eine Temperatur auf 250 bis 350°C, vorzugsweise von 270 bis 330°C, in Anwesenheit von einem oder mehreren primären und/oder sekundären Antioxidationsmitteln und von mindestens einer Verbindung der allgemeinen Formel (I) wie in irgendeinem der Ansprüche 1, 4 und 5 definiert.

10. Verfahren nach Anspruch 9, in welchem das Polymer Polypropylen, das im wesentlichen aus isotaktischen Makromolekülen besteht, ist.

11. Verfahren nach irgendeinem der Ansprüche 9 und 10, in welchem das Polymer ein Copolymer von Propylen und Ethylen, das einen überwiegenden Anteil an Propylen enthält, ist.

12. Verfahren nach irgendeinem der Ansprüche 9 bis 11, in welchem das Benzopinacol-Derivat in Mengen von 0,01 bis 3 Gew.-%, bezogen auf das Polymer, eingesetzt wird.

13. Verfahren nach irgendeinem der Ansprüche 9 bis 12, in welchem die Homo- oder Copolymeren von Propylen kristalline Polymere sind.

## Revendications

1. Composition thermodégradable à base d'homo- ou de copolymères de propylène, comprenant au moins un antioxydant primaire et/ou secondaire et au moins un dérivé benzopinacol répondant à la formule générale: 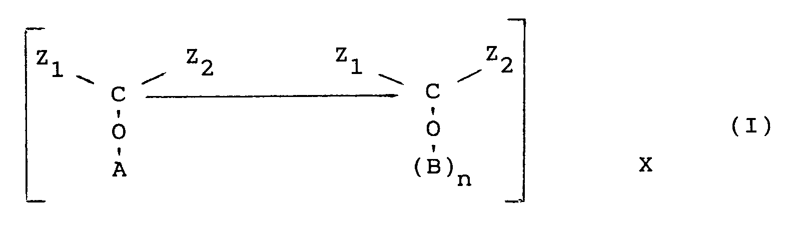 avec n est égal à 1 ou 0, et
dans laquelle :
. pour n = 1 et X = 1:
Z₁ et Z₂ forment ensemble un groupe 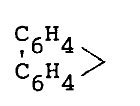
A et B sont des groupes 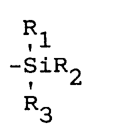 dans lesquels R₁, R₂ et R₃, identiques ou différents l'un de l'autre, représentent des radicaux alkyles en C₁ à C₄ ou des radicaux aryles en C₆ à C₁₂;
. pour X compris entre 3 et 20 et n = 0:
Z₁ et Z₂, identiques ou différents l'un de l'autre, sont des radicaux aryles,
A représente un groupe 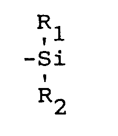 et il fait partie d'un oligomère de formule (I) qui contient au moins 3 et jusqu'à 20 motifs répétitifs de formule: 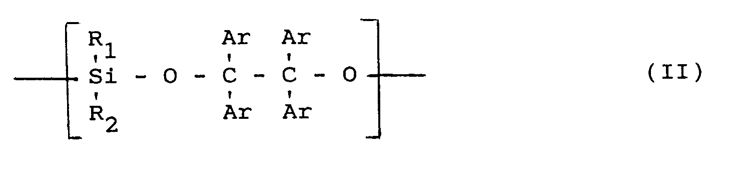 dans laquelle:
Ar est un radical aryle, et
R₁ et R₂ ont des significations telles que définies ci-dessus;
. et pour n = 0, X = 1:
Z₁ et Z₂ identiques ou différents l'un de l'autre, sont des radicaux aryle;
A représente 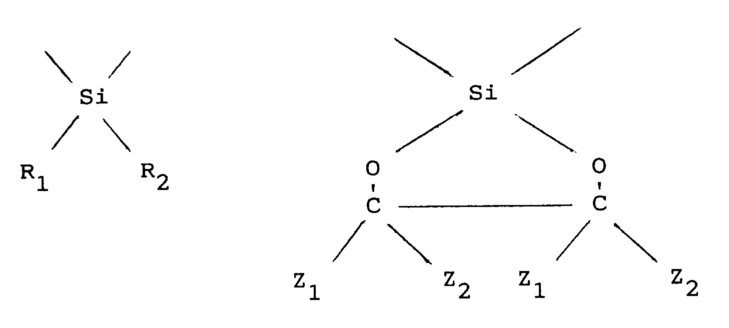
l'atome de silicium étant également lié aux atomes d'oxygène des deux groupes: 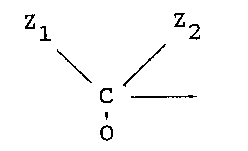 et R₁ et R₂ ayant les significations définies ci-dessus.

2. Compositions selon la revendication 1, caractérisées en ce que le dérivé de benzopinacol est présent en proportions comprises entre 0,01 et 3% par rapport au poids du polymère.

3. Compositions selon l'une quelconque des revendications 1 et 2, caractérisées en ce que le(s) antioxydant(s) est (sont) présent(s) en proportions pouvant atteindre 2% par rapport au poids du polymère.

4. Compositions selon l'une quelconque des revendications 1 à 3, caractérisées en ce que le dérivé de benzopinacol de formule générale (I), dans laquelle X est compris entre 3 et 20 et n = 0, est un oligomère renfermant de 3 à 20 motifs répétitifs de formule:

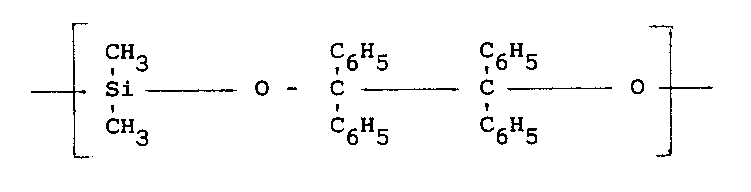

5. Compositions selon l'une quelconque des revendications 1 à 3, caractérisées en ce que le dérivé de benzopinacol répond aux formules:

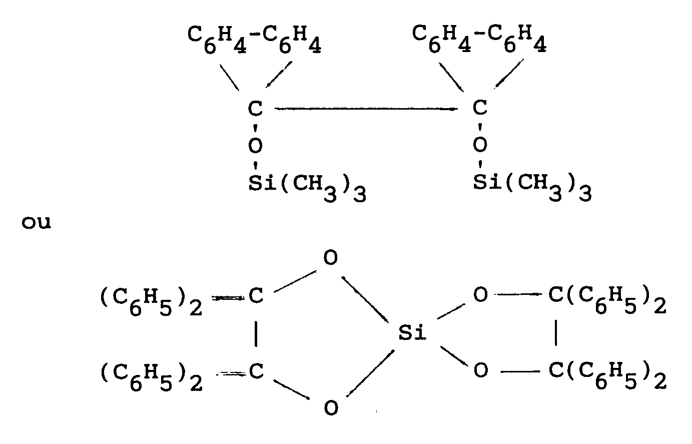

6. Compositions selon l'une quelconque des revendications 1 à 5, caractérisées en ce que le polymère est du polypropylène essentiellement constitué de macromolécules isotactiques.

7. Compositions selon l'une quelconque des revendications 1 à 6, caractérisées en ce que le polymère est un copolymère cristallin de propylène et d'éthylène contenant une proportion majeure de propylène.

8. Compositions selon l'une quelconque des revendications 1 à 7, caractérisées en ce que ces homo- et copolymères de propylène sont des polymères cristallins.

9. Procédé pour la thermodégradation d'homo- ou de copolymères de propylène, consistant à chauffer ces homo- ou copolymères à une température de 250 à 350°C, de préférence de 270 à 330°C, en présence d'un ou de plusieurs antioxydants primaire et/ou secondaire et d'au moins un dérivé de formule générale (I) tel que défini dans l'une quelconque des revendications 1, 4 et 5.

10. Procédé selon la revendication 9, caractérisé en ce que le polymère est du polypropylène constitué essentiellement de macromolécules isotactiques.

11. Procédé selon l'une quelconque des revendications 9 et 10, caractérisé en ce que le polymère est un copolymère de propylène et d'éthylène contenant une proportion majeure de propylène.

12. Procédé selon l'une quelconque des revendications 9 à 11, caractérisé en ce que le dérivé de benzopinacol est employé en proportions de 0,01 à 3% par rapport au poids du polymère.

13. Procédé selon l'une quelconque des revendications 9 à 12, caractérisé en ce que ces homo- ou copolymères de propylène sont des polymères cristallins.
